# EUROPÄISCHE PATENTSCHRIFT

(11) **EP 3 540 027 B1**
(45) Veröffentlichungstag und Bekanntmachung des Hinweises auf die Patenterteilung: **25.03.2020**
(21) Anmeldenummer: 19162093.9
(22) Anmeldetag: 12.03.2019
(51) Int. Cl.: C09K 21/10, C09K 21/12, C09K 21/14, C08L 97/02, C08L 97/00

(54) **FLAMMSCHUTZMITTEL UND VERFAHREN ZUR HERSTELLUNG DES FLAMMSCHUTZMITTELS SOWIE DESSEN VERWENDUNG**
FLAME RETARDANT AND METHOD FOR PRODUCTION OF THE FLAME RETARDANT AND USE THEREOF
AGENT IGNIFUGE ET PROCÉDÉ DE PRODUCTION D'AGENT IGNIFUGE AINSI QUE SON UTILISATION

(30) Priorität: 13.03.2018 DE 102018105716
(43) Veröffentlichungstag der Anmeldung: 18.09.2019
(73) Patentinhaber: Technische Universität Dresden, 01069 Dresden (DE)
(72) Erfinder: Dr. FISCHER, Steffen, 01705 Freital (DE); Dr. THÜMMLER, Katrin, 09599 Freiberg (DE); GEBKE, Stefan, 35396 Giessen (DE); UNBEHAUN, Holger, 01097 Dresden (DE); Dr. WAGENFÜHR, André, 01109 Dresden (DE); DELENK, Hubertus, 01920 Panschwitz-Kuchau (DE)
(74) Vertreter: Kailuweit & Uhlemann Patentanwälte Partnerschaft mbB

(56) Entgegenhaltungen:
- WO-A1-2013/135890
- DE-B- 1 258 100
- US-A- 3 996 325

## Beschreibung

Aufgrund der brandschutztechnischen Anforderungen im Bau- und Verkehrswesen sowie im Elektro- bzw. Elektronik-Sektor besteht ein Bedarf nach Flammschutzmitteln in brennbaren Werkstoffen und Fertigteilen, welche die Ausbreitung von Bränden einschränken, verlangsamen oder verhindern. Man unterscheidet in der Regel zwischen vier Gruppen chemischer Flammschutzmittel: den anorganischen Flammschutzmitteln, den halogenierten Flammschutzmitteln, den organischen Phosphorverbindungen sowie den stickstoffbasierten Flammschutzmitteln.

Für Holz- und Faserwerkstoffe finden überwiegend Flammschutzmittel auf Basis von Bor, Aluminiumhydroxid, Ammonium- und Phosphatsalzen Verwendung (N. N. 2014). Der Einsatz anorganischer Flammschutzmittel bei Einblasdämmstoffen auf Basis von Cellulosefasern aus Altpapier hat bei der Herstellung staubarmer Produkte Verluste zur Folge, da die in Pulverform eingesetzten Flammschutzmittel ungenügend am Fasermaterial anhaften. Darüber hinaus haben die überwiegend in der Holzwerkstoffindustrie verwendeten Flammschutzmittel einen negativen Einfluss auf die Festigkeitseigenschaften der gefertigten plattenförmigen Produkte und Formteile, da die verwendeten Salze keinen Beitrag zur Festigkeit leisten. Die signifikante Verringerung der Druck-, Biege- und Zugfestigkeit wird durch den Einsatz größerer Mengen synthetischer Bindemittel kompensiert. Mit der Verwendung von Flammschutzmittelsalzen erhöht sich die Wasseraufnahmefähigkeit von Holz- und Faserwerkstoffen. Zudem können bei der Verwendung anorganischer Flammschutzmittelsalze oder Mischungen daraus Ausblühungen auf Oberflächen von Holz- und Faserwerkstoffen auftreten, die in Kombination mit der Luftfeuchtigkeit einen korrosiven Effekt auf die Fasern haben (Mazeration). Das hat wiederum eine Verringerung der mechanischen Eigenschaften zur Folge.

Zur Verbesserung des Flammschutzes von Kunststoffen finden organische Halogenverbindungen, wie Tetrabrombisphenol A (TBBPA) und Tris(2-chlorisopropyl)phosphat (TCPP) Anwendung und auch Leder werden halogenhaltige Additive zugegeben (Bilitewski *et al.* 2012).

Nachteilig weist ein Großteil der in der Baustoff- und Textilbranche eingesetzten Flammschutzmittel eine hohe Toxizität, geringe Umweltverträglichkeit und schlechte Abbaubarkeit auf. Dies führte in den letzten Jahren zu einer starken gesetzlichen Reglementierung von Flammschutzmitteln vor allem im Bereich der borathaltigen und halogenierten Flammschutzmittel (Leisewitz *et al.* 2000), aber auch für anorganischer Ammoniumsalze (REACH-Verordnung der EU, 2016).

EP 1 805 191 B1 beschreibt phosphorylierte, hydrolysierbare Tannine sowie deren Verwendung in der Textilbeflockung, als Träger für pharmazeutische Produkte sowie in Flammschutzmitteln. Das Verfahren zu deren Herstellung erfolgt mittels Phosphorylchlorid in einer wässrigen Lösung unter Verwendung von anorganischen Basen. Nachteilig weist das Phosphatierungsmittel Phosphorylchlorid eine hohe Toxizität und Korrosivität auf, wodurch der Herstellungsprozess nicht ökologisch und aufwendig ist.

DE 1 258 100 A1 bzw. US 3 250 756 A offenbart ein Verfahren zur Phosphorylierung von hydroxylgruppenhaltigen Polymeren, bevorzugt wasserlösliche Cellulosederivate wie Methylcellulose oder Stärke, insbesondere Amylose oder Amylopektin, mit den Reaktionsprodukten von Ortho-phosphorsäure mit Harnstoff oder N-substituierten Harnstoffen bei höheren Temperaturen in nicht wässriger Suspension, wobei das Suspensionsmittel ein wenig oder nicht mit Wasser mischbarer Alkohol und/oder Benzolhomologes ist. Die phosphorylierten Polymere besitzen eine thermische Stabilität und verminderte Brennbarkeit, wodurch sie als flammwidrige Imprägnierungen und für flammwidrige Zusätze zu Kunstharzdispersionen geeignet sind. Nachteilig erfolgt die Synthese im nicht wässrigen Suspensionsmedium unter Verwendung aromatischer Kohlenwasserstoffe, wie Benzol, Toluol (leicht entzündlich, gesundheitsschädlich bzw. giftig und z. T. krebserregend) oder höherer Alkohole wie Butanol, Propanol und Gemische. Weiterhin nachteilig ist der erforderliche Destillationsschritt, indem das enthaltene Wasser bei der Synthese entfernt wird.

DE 10 2012 204 238 A1 und WO 2013/135890 A1 beschreiben die Verwendung von stickstoff- und phosphorhaltigen Polysaccharidderivaten, insbesondere Stärkederivaten als Flammschutzmittel, insbesondere in Holz und Holzverbundwerkstoffen. Nachteilig wird Stärke größtenteils aus Nahrungspflanzen gewonnen, womit deren Verwendung in Flammschutzmitteln in unmittelbarer Konkurrenz zur Lebensmittelproduktion steht. Zudem sind phosphorylierte Stärken häufig viskos bis Gel artig, was sowohl die Applizierung auf dem Werkstoff erschwert als auch eine energieintensive Trocknung zur Folge hat, die die Wirtschaftlichkeit des Herstellungsprozesses des Holzverbundwerkstoffes senkt.

DE 198 59 123 C1 beschreibt Stärkephosphate, welche durch Umsatz von Stärke oder stärkehaltigen Materialien mit einem Phosphorylierungsmittel und Harnstoff erhalten werden und deren Verwendung als Superabsorber, Klebstoffkomponente, Löschwasserzusatzmittel, Mittel zur Wasserenthärtung oder Waschmittelzusatz.

DE 3 405 373 A1 beschreibt ein Verfahren zur Formstabilisierung und zum Schutz von Holz und holzhaltigen Materialien mittels nativer Gerbstoffe oder diesen in ihren Eigenschaften ähnlichen Stoffen. Die Formstabilisierung erfolgt durch Tränken des Holzes in einer Gerbstofflösung (insbesondere Tannine) und anschließender Wärmebehandlung. Bevorzugt erfolgt der Zusatz von weiteren Stoffen zur Gerbstofflösung, welche z. B. die Stabilisierung, Fixierung und Färbung beeinflussen oder einen zusätzlichen Schutz gegen Pilze, Insekten und/oder Feuer sowie Verwitterung bewirken. Nachteilig ist die Zugabe des nicht näher beschriebenen Flammschutzmittels in physikalischer Mischung. D. h., dass Flammschutzmittel ist am Gerbstoff bzw. Tannin nicht chemisch gebunden. Weiterhin nachteilig ist die erforderliche Wärmebehandlung nach der Tränkung, die thermische Energie verbraucht.

Weiterhin beschreibt EP 2 485 880 A1 bzw. WO 2011/042609 A1 ein Verfahren zur Imprägnierung von Holz mit Chemikalien, insbesondere einem Vernetzer mit Carboxylgruppen, bevorzugt einer Polycarboxylsäure, und ein niedermolekulares Oligomer mit Hydroxylgruppen, z. B. Stärke oder native Tannine, wobei die Carboxylgruppen des Vernetzers Estergruppen mit den Hydroxylgruppen des Holzes und/oder den Hydroxylgruppen des niedermolekularen Oligomers eingehen. In der Chemikalienmischung kann auch ein Flammschutzmittel enthalten sein. Bevorzugt erfolgt der Zusatz eines Katalysators unter anderem ausgewählt aus anorganischen Phosphaten. Die Phosphatzugabe erfolgt lediglich als Katalysator, der nach einer chemischen Reaktion unverändert vorliegt. Nachteilig liegen somit keine kovalent gebundenen Phosphate am Tannin vor. Weiterhin nachteilig liegt nach der Zugabe eines anorganischen Salzes als Flammschutzmittel lediglich eine physikalische Mischung vor.

US 3 996 325 A beschreibt ein Verfahren zur Herstellung einer feuerfesten Spanplatte aus Rinde, Holzspänen und einem Flammschutzmittel, wobei als Flammschutzmittel eine wässrige Lösung von Diammoniumphosphat eingesetzt wird. Als Harzbindemittel wird Harnstoff-Formaldehydharz zugesetzt. Nachteilig liegt nach der Zugabe eines anorganischen Salzes als Flammschutzmittel lediglich eine physikalische Mischung vor.

Nach wie vor besteht ein Bedarf an neuen Flammschutzmitteln, insbesondere solchen, die umweltverträglich in der Herstellung und Anwendung sowie biologisch abbaubar sind.

Die Aufgabe der vorliegenden Erfindung besteht darin, ein Flammschutzmittel bereitzustellen, welches umweltverträglich und biologisch abbaubar ist.

Ferner ist es Aufgabe der Erfindung, ein Flammschutzmittel bereitzustellen, dessen Verwendung in Holz- und Faserwerkstoffen eine gleichbleibende oder erhöhte Festigkeit bewirkt.

Eine weitere Aufgabe der Erfindung ist es, ein präparativ einfaches, kostengünstiges und gleichzeitig umweltschonenden Verfahren zur Herstellung des Flammschutzmittels anzugeben.

Erfindungsgemäß wird die Aufgabe gelöst, durch ein Flammschutzmittel gemäß Anspruch 1.

Vom erfindungsgemäßen Flammschutzmittel gehen vorteilhafterweise keine gesundheits- und umweltschädigende Einflüsse aus und durch die Verwendung des erfindungsgemäßen Flammschutzmittels wird vorteilhafterweise die Umweltverträglichkeit damit hergestellter Produkte und Werkstoffe verbessert.

Vorteilhaft besitzt der organisch gebundene Phosphor in Kombination mit dem organisch gebundenen Stickstoff synergetische Flammschutzeigenschaften, wodurch ein verbesserter Flammschutz des erfindungsgemäßen Flammschutzmittels erhalten wird. Die Flammschutzwirkung beruht auf einer Kombination mehrerer Mechanismen. Das phosphorhaltige Flammschutzmittel wirkt vor allem auf der Oberfläche des zu schützenden Materials. Die freien und gebundenen Phosphate dienen als Säurespender. Sie bewirken eine Dehydrierungs- und Verkohlungsreaktion sowohl im Flammschutzmittel als auch auf dem zu schützendem Material. Bei Hitzeeinwirkung wird somit eine kohärente und homogene Kohleschicht gebildet, die das darunter befindliche Material von der Einwirkung der Strahlungswärme und brandförderndem Sauerstoff abgrenzt. Gleichzeitig dient das Flammschutzmittel als Mittel zur Stabilisierung des Kohlenstoffs durch Verminderung des oxidativen Abbaus und der Umwandlung in brennbare Gase. Durch die Anbindung der Phosphate an das Rindenmaterial oder den Rindenextrakt sind die Reaktionen, die zur Ausbildung der Schutzschicht führen, von Transport- und Diffusionsprozessen unabhängig und somit sehr effektiv. Darüber hinaus können Phosphate eine Reaktion in der Gasphase bewirken, bei der die in der Verbrennung entstehenden energiereichen Radikale durch Phosphorsuboxide (z. B. PO-Radikale) neutralisiert werden und es zu einer Unterbrechung des im Brand stattfindenden Radikalkettenmechanismus kommt. Weiterhin setzen die stickstoffhaltigen funktionellen Gruppen, insbesondere die Carbamatgruppen sowie Harnstoff, im Brandfall gasförmigen Stickstoff frei, der als Schutzgas die Versorgung des Brandherdes mit Reaktionssauerstoff erschwert.

Das erfindungsgemäße Flammschutzmittel weist vorteilhafterweise eine hohe Wasserlöslichkeit bei gleichzeitig geringer Viskositätszunahme auf und führt bei Applikation als Lösung bzw. Suspension zu einer verbesserten Haftung des Flammschutzmittels z. B. an Cellulosefasern in Einblasdämmstoffen aus Cellulosefasern.

Weiterhin vorteilhaft erhöht das erfindungsgemäße Flammschutzmittel die Festigkeit damit hergestellter Werkstoffe, wie z. B. plattenförmiger Holz- und Faserwerkstoffe und Formteile aus Holz- und Faserwerkstoffen, da es Klebeeigenschaften aufweist, die eine Verringerung des Einsatzes von Bindemitteln bei der Herstellung der Werkstoffe ermöglichen.

Weiter vorteilhaft führt das erfindungsgemäße Flammschutzmittel nicht zur Erhöhung der Wasseraufnahmefähigkeit der damit hergestellten Werkstoffe und die optischen Eigenschaften der mit dem erfindungsgemäßen Flammschutzmittel hergestellten Werkstoffe bleiben unverändert, da keine anorganischen Salze auskristallisieren. Weiter vorteilhaft liefert das erfindungsgemäße Flammschutzmittel einen Beitrag zu einer sehr geringen Formaldehydemission damit hergestellter plattenförmiger Holz- und Faserwerkstoffe und Formteile aus Holz- und Faserwerkstoffen, wenn ein formaldehydhaltiges Klebstoffsystem verwendet wird.

Mit dem erfindungsgemäßen Flammschutzmittel ist es vorteilhafterweise möglich, bei Leder und Lederwerkstoffen die Flammschutzausstattung und die Gerbung in einem Prozessschritt durchzuführen. Dabei stellt das Flammschutzmittel in einer Ausführungsform vorteilhaft gleichzeitig den Gerbstoff dar.

Erfindungsgemäß wird unter einem Rindenmaterial ein aus der Natur gewonnenes, organisches Material aus dem Stamm, die Äste und/oder die Wurzeln umgebenden Teilen verholzter Pflanzen verstanden, insbesondere polyhydroxyphenol- bzw. tanninhaltige Materialien. In Ausführungsformen umfassen verholzte Pflanzen Bäume, Sträucher, Nussschalen (wie z. B. Walnussschalen) und verholzende Gräser, wie Bambus. Viele dieser Rindenmaterialien fallen vorteilhaft als Abfall bzw. preiswerte Reststoffe an.

Das Rindenmaterial wird insbesondere zerkleinert eingesetzt, z. B. als Hackschnitzel, Pellets, Späne, Fasern, Holzmehl oder Pulver.

Die Rindenextrakte werden durch Extraktion aus den oben genannten Rindenmaterialien erhalten. Unter einem Rindenextrakt, werden Extrakte verstanden, die polyhydroxyphenolische Extraktstoffe, insbesondere Tannine, enthalten. Die Rindenextrakte werden insbesondere durch Extraktion mit wässrigen und/oder organischen Lösungsmittel und/oder aus Mischungen aus wässrigen und organischen Lösungsmitteln erhalten. Der Begriff Rindenextrakt umfasst dabei sowohl Extrakte in flüssiger als auch getrockneter Form.

Erfindungsgemäß sind Hydroxylgruppen im Rindenmaterial oder Rindenextrakt zumindest teilweise mit Phosphat- und/oder Carbamatgruppen verestert.

In der Erfindung kommen vorteilhaft toxikologisch unbedenkliche Phosphatsalze und/oder Phosphorsäure als Phosphatierungsmittel zum Einsatz. Bevorzugt sind diese ausgewählt aus Ammoniumdihydrogenphosphat, Diammoniumhydrogenphosphat, Triammoniumphosphat, Phosphorsäure, Ureaphosphat, Natriumdihydrogenphosphat, Dinatriumhydrogenphosphat, Trinatriumphosphat und/oder deren Hydrate und/oder Mischungen aus den genannten Phosphatierungsmitteln. Durch die Veresterung und/oder Carbamatisierung enthält das Flammschutzmittel insbesondere Monophosphatester, Di- oder Triphosphate, Carbamate, Phosphat-Carbamate, Urethan- oder Polyurethanbindungen und/oder Harnstoffkomplexe.

Bevorzugt weist das Flammschutzmittel einen Gesamt-Phosphorgehalt von 5 % bis 50 % (m/m), bevorzugt von 10 % bis 40 % (m/m), und/oder einen Gesamt-Stickstoffgehalt im Bereich von 10 bis 30 % (m/m), bevorzugt von 15 bis 25 % (m/m) auf.

Das Flammschutzmittel weist einen Gehalt an organisch gebundenen Phosphaten von 5 % bis 30 % (m/m), bevorzugt von 10 % bis 25 % (m/m), und/oder organisch gebundene Carbamate im Bereich von 1 % bis 5 % (m/m), bevorzugt von 2 bis 3 % (m/m) auf.

Die Bestimmung des Gesamt-Phosphorgehalts erfolgt mittels Elementaranalyse. Die Bestimmung des Orthophosphatgehalts erfolgt mittels Vanadat-Molybdat-Methode. Der Gehalt der organisch gebundenen Phosphate wird aus der Differenz des Gesamt-Phosphatgehaltes und des Orthophosphatgehalts bestimmt. Die Bestimmung des Gesamt-Stickstoffgehalts erfolgt per Elementaranalyse, bevorzugt gasanalytisch mittels C/N-Analysator. Die Bestimmung der organisch gebundenen Carbamatgruppen erfolgt nasschemisch mittels modifizierter Kjeldahl-Methode (Kessel 1987).

In weiteren Ausführungsformen umfasst das Flammschutzmittel mindestens einen weiteren Bestandteil, wobei der mindestens eine weitere Bestandteil ausgewählt ist aus Harnstoff, Biuret, Phosphatsalzen und Ammoniumsalzen.

Gegenstand der Erfindung ist auch ein Verfahren zur Herstellung eines Flammschutzmittels umfassend die Schritte
a) Zusatz von mindestens einem Phosphatsalz und/oder Phosphorsäure als Phosphatierungsmittel sowie geschmolzenem Harnstoff zu Rindenmaterial oder Rindenextrakt, wobei das Rindenmaterial oder der Rindenextrakt ein polyhydroxyphenol- oder tanninhaltiges Material ist,
b) Homogenisierung und Derivatisierung unter Temperatureinwirkung.

Vorteilhaft ist das Verfahren zur Herstellung eines Flammschutzmittels präparativ einfach, kostengünstig und gleichzeitig umweltschonend.

Weiterhin vorteilhaft werden in dem Verfahren zur Herstellung eines Flammschutzmittels toxikologisch unbedenkliche Verbindungen verwendet.

Bevorzugt erfolgt das Verfahren zur Herstellung eines Flammschutzmittels in der Reihenfolge der Schritte a) und b).

Das Rindenmaterial ist wie oben ausgewählt. Das Rindenmaterial wird insbesondere zerkleinert eingesetzt, z. B. als Hackschnitzel, Pellets, Späne, Fasern, Holzmehl oder Pulver.

Der Rindenextrakt wird wie oben beschrieben durch Extraktion eines wie oben ausgewählten Rindenmaterials erhalten.

Zweckmäßig werden das Rindenmaterial oder der Rindenextrakt im Masseverhältnis 1:1 bis 1:6 mit Harnstoff umgesetzt. Die Zugabe des Phosphatierungsmittels erfolgt im Masseverhältnis 1:0,5 bis 1:4 bezogen auf das Rindenmaterial oder den Rindenextrakt.

Zweckmäßig erfolgt die Homogenisierung und Derivatisierung in Schritt c) bei einer Temperatur über 135 °C, insbesondere im Bereich von 135 °C bis 170 °C, bevorzugt bei 135 bis 150 °C.

In einer Ausführungsform umfasst das Verfahren zur Herstellung des Flammschutzmittels mindestens einen weiteren Schritt, wobei der mindestens eine weitere Schritt eine Extraktion, bevorzugt eine Extraktion des Rindenmaterials vor Schritt a) oder eine Extraktion des in Schritt b) erhaltenen Materials darstellt.

Gegenstand der Erfindung ist auch die Verwendung des erfindungsgemäßen Flammschutzmittels in der Herstellung oder Beschichtung von Werkstoffen, wie Holz- und Faserwerkstoffe, Naturfaserverstärkte Kunststoffe (NFK) und Holz-Polymer-Werkstoffe (WPC) sowie Leder und Lederwerkstoffe.

Ein weiterer Gegenstand der Erfindung sind Werkstoffe, die das erfindungsgemäße Flammschutzmittels aufweisen. Wie bereits zuvor beschrieben, kann das Flammschutzmittel beispielsweise mit dem Werkstoff vermischt oder auch als Beschichtung auf den Werkstoff aufgetragen werden. Vorteilhaft werden dadurch die Flammschutzeigenschaften der Werkstoffe erhöht. Gleichzeitig wird die Umweltverträglichkeit gegenüber Werkstoffen mit klassischen Flammschutzmitteln erhöht.

Die Erfindung betrifft insbesondere Holz- und Faserwerkstoffe, die das erfindungsgemäße Flammschutzmittel, insbesondere 5 % bis 20 % (m/m), bevorzugt 7 % bis 12 % (m/m) und/oder eine Beschichtung mit erfindungsgemäßem Flammschutzmittel aufweisen.

Die Holz- und Faserwerkstoffe sind insbesondere ausgewählt aus losen und plattenförmigen Werkstoffen sowie Formteilen, Vollholz, Furnier und Verbundwerkstoffen.

Die Holz- und Faserwerkstoffe weisen insbesondere lignocellulosehaltige und/oder cellulosehaltige Fasern und/oder Späne aus nachwachsenden Rohstoffen, wie z. B. Cellulose aus Altpapier, Einjahrespflanzen (z. B. Hanf, Flachs, Rapsstroh, Getreidestroh), Seegras, Bambus und/oder lignocellulosehaltige und/oder cellulosehaltige Fasern und/oder Späne aus Reststoffen auf.

In Ausführungsformen weisen die Holz- und Faserwerkstoffe mehrere Lagen, wie z. B. hochfeste Decklagen und eine leichte Mittellage in einem nach dem Sandwichprinzip aufgebauten Verbund auf.

Die losen Holz- und Faserwerkstoffe, insbesondere Dämmstoffe auf Basis nachwachsender Rohstoffe, wie z. B. Einblasdämmstoffe auf Basis von Cellulosefasern aus Altpapier oder Holzfasern, weisen zweckmäßig eine nach DIN EN 15101-1 oder DIN EN 1602 bestimmte Rohdichte auf. Sie können z. B. durch offenes Aufblasen auf Geschossdecken in Gebäuden bzw. durch füllendes Einblasen in Hohlräume in Gebäuden eingebracht werden. Dies geschieht insbesondere im Bereich von 10 kg/m³ bis 100 kg/m³, bevorzugt von 20 kg/m³ bis 80 kg/m³, im eingebauten Zustand besonders bevorzugt von 25 kg/m³ bis 65 kg/m³.

Die losen Holz- und Faserwerkstoffe, insbesondere Dämmstoffe, die das erfindungsgemäße Flammschutzmittel aufweisen, erfüllen zumindest die Anforderungen für eine Klassifizierung "B-s2, d0 / E" bezüglich des Brandverhaltens nach DIN EN 13501-1.

Die plattenförmigen Holz- und Faserwerkstoffe, insbesondere Spanplatten, Faserplatten, MDF, HDF, OSB, Schichtholzplatten, Sperrholz, Vollholz- und Furnierwerkstoffe, besonders bevorzugt Holzfaserdämmstoffplatten, weisen zweckmäßigerweise eine nach DIN EN 323 bestimmte Rohdichte im Bereich von 50 kg/m³ bis 1200 kg/m³, bevorzugt von 90 kg/m³ bis 900 kg/m³, besonders bevorzugt von 100 kg/m³ bis 400 kg/m³ auf.

In Ausführungsformen weisen die plattenförmigen Holz- und Faserwerkstoffe weiterhin Zuschlagstoffe, wie z. B. Hydrophobierungsmittel auf Basis von Paraffin, Bindemittel, wie z. B. Polymeres Diphenylmethandiisocyanat (PMDI), Harnstoff-Formaldehyd- (UF-) bzw. Melamin-Harnstoff-Formaldehyd- (MUF) Harz auf.

Die plattenförmigen Holz- und Faserwerkstoffe, die das erfindungsgemäße Flammschutzmittel aufweisen, erfüllen zumindest die Anforderungen für eine Klassifizierung in die Baustoffklasse B2 nach DIN 4102-1.

Die Formteile aus Holz- und Faserwerkstoffen, besonders urgeformte Formteile aus Lagenholz (z. B. Sperrholzformteile) und aus Spänen, besonders bevorzugt umgeformte Formteile aus Fasern weisen üblicherweise eine Rohdichte im Bereich von 50 kg/m³ bis 1200 kg/m³, bevorzugt von 90 kg/m³ bis 900 kg/m³, besonders bevorzugt von 100 kg/m³ bis 400 kg/m³ auf.

In Ausführungsformen weisen die Formteile Zuschlagstoffe, wie z. B. Hydrophobierungsmittel auf Basis von Paraffin, Bindemittel, wie z. B. Polymeres Diphenylmethandiisocyanat (PMDI), Harnstoff-Formaldehyd- (UF-) bzw. Melamin-Harnstoff-Formaldehyd- (MUF) Harz auf.

Die Formteile, die das erfindungsgemäße Flammschutzmittel aufweisen, erfüllen zumindest die Anforderungen für eine Klassifizierung in die Baustoffklasse B2 nach DIN 4102-1.

Dabei werden unter plattenförmigen Holz- und Faserwerkstoffen und Formteilen aus Holz- und Faserwerkstoffen insbesondere mit einer Heiß- und/oder Formteilpresse herstellbare Werkstoffe verstanden, die durch Verdichten und/oder Verpressen mit einem Bindemittel erzeugt werden und die ihre Dichte durch die im Vliesbildungs- und Pressprozess eingestellten Parameter erhalten. Je nach Anforderung können plattenförmige Holz- und Faserwerkstoffe und Formteile aus Holz- und Faserwerkstoffen Additive, wie z. B. Bindemittel, Hydrophobierungsmittel und Fungizide enthalten. Unter einem Bindemittel wird eine Verbindung verstanden, welche Feststoffe, wie z. B. Fasern und/oder Späne, miteinander verklebt.

Die Erfindung betrifft insbesondere die Verwendung des erfindungsgemäßen Flammschutzmittels in Verfahren zur Herstellung oder Beschichtung von Holz- und Faserwerkstoffen.

Dazu erfolgt die Applikation des erfindungsgemäßen Flammschutzmittels an Holz- und Faserwerkstoffe insbesondere im Nass- und/oder im Trockenverfahren, als Pulver und/oder in Lösung bzw. als Suspension und/oder als Teil eines Beschichtungsmittels. Vorteilhaft kann die Applikation in Lösung bzw. als Suspension und/oder als Teil eines Beschichtungsmittels, insbesondere in einem Sprühprozess erfolgen, da das Flammschutzmittel eine hohe Wasserlöslichkeit bei gleichzeitig geringer Viskositätszunahme aufweist.

Vorteilhaft führt die Applikation als Lösung bzw. als Suspension an die lignocellulosehaltigen und/oder cellulosehaltigen Fasern und/oder Späne von losen Holz- und Faserwerkstoffen, besonders von Dämmstoffen auf Basis nachwachsender Rohstoffe, besonders bevorzugt von Einblasdämmstoffen auf Basis von Cellulosefasern aus Altpapier zu einer verbesserten Haftung des Flammschutzmittels an den lignocellulosehaltigen und/oder cellulosehaltigen Fasern und/oder Spänen sowie zu einer Minimierung der Verluste an Flammschutzmittel. Verklumpungen oder Agglomeratbildungen der lignocellulosehaltigen und/oder cellulosehaltigen Fasern und/oder Späne werden dabei vorteilhaft vermieden.

Vorteilhaft erfordert die Applikation als Lösung bzw. als Suspension an die lignocellulosehaltigen und/oder cellulosehaltigen Fasern und/oder Späne von plattenförmigen Holz- und Faserwerkstoffen und Formteilen einen geringen Wassereintrag sowie einen geringen Trocknungsaufwand. Vorteilhaft erhöht das erfindungsgemäße Flammschutzmittel die Festigkeiten, da das Flammschutzmittel Klebeeigenschaften aufweist, die eine Verringerung des Einsatzes von Bindemitteln ermöglicht, eine Variation des Anteils des Flammschutzmittels zulässt und die Einstellung der Flammschutzeigenschaften sowie der mechanischen Eigenschaften ermöglicht. Weiter vorteilhaft führt die Applikation des erfindungsgemäßen Flammschutzmittels zu keiner ungewünschten Erhöhung der Wasseraufnahmefähigkeit sowie zu keiner ungewünschten Auskristallisierung anorganischer Salze und damit zu keiner Beeinträchtigung der optischen Eigenschaften.

Vorteilhaft leistet das erfindungsgemäße Flammschutzmittel einen Beitrag zu einer sehr geringen Formaldehydemission, wenn ein formaldehydhaltiges Klebstoffsystem verwendet wird.

Die Erfindung betrifft weiter Kompositmaterialien und Verbundwerkstoffe, insbesondere naturfaserverstärkte Kunststoffe (NFK) und Holz-Polymer-Werkstoffe (WPC), die das erfindungsgemäße Flammschutzmittels, insbesondere 5 % bis 20 % (m/m), besonders bevorzugt 7 % bis 12 % (m/m), und/oder eine Beschichtung mit erfindungsgemäßem Flammschutzmittel aufweisen.

Das erfindungsgemäße Flammschutzmittel ist dabei im Kompositmaterial bzw. Verbundwerkstoff insbesondere als Matrixmaterial, Füllmaterial und/oder als Beschichtung enthalten.

Die Erfindung betrifft weiterhin die Verwendung des erfindungsgemäßen Flammschutzmittels in Verfahren zur Herstellung oder Beschichtung von Kompositmaterialien bzw. Verbundwerkstoffen, insbesondere Naturfaserverstärkten Kunststoffen (NFK) und Holz-Polymer-Werkstoffen (WPC).

Die Applikation des Flammschutzmittels erfolgt dabei im Nass- und/oder Trockenverfahren, als Pulver und/oder in Lösung bzw. als Suspension auf die verwendeten Partikel aus Holz und/oder aus Fasern aus nachwachsenden Rohstoffen. Insbesondere erfolgt die Zugabe des Flammschutzmittels als Pulver und/oder in Lösung bzw. als Suspension zum Matrixwerkstoff in einem Extrusionsprozess und/oder bei der Compoundierung. Alternativ oder ergänzend erfolgt die Zugabe des Flammschutzmittels als Teil eines Beschichtungsmittels.

Die Erfindung betrifft Leder und Lederwerkstoffe, die das erfindungsgemäße Flammschutzmittel, insbesondere 5 % bis 20 % (m/m), besonders bevorzugt 7 % bis 12 % (m/m), und/oder eine Beschichtung mit erfindungsgemäßem Flammschutzmittel aufweisen.

Die Erfindung betrifft weiterhin die Verwendung des erfindungsgemäßen Flammschutzmittels in Verfahren zur Herstellung oder Beschichtung von Leder und Lederwerkstoffen. Die Applikation des Flammschutzmittels erfolgt dabei im Nass- und/oder Trockenverfahren, als Pulver und/oder in Lösung bzw. als Suspension auf die verwendeten Partikel aus Leder und/oder Lederwerkstoffen. Bevorzugt erfolgt die Zugabe des Flammschutzmittels als Pulver und/oder in Lösung bzw. als Suspension zu Leder und Lederwerkstoffen, bevorzugt als Lösung bzw. als Suspension in einem Gerbprozess. Vorteilhaft kann in einer Ausführungsform dabei das Flammschutzmittel gleichzeitig den Gerbstoff darstellen. Alternativ oder ergänzend erfolgt die Zugabe des Flammschutzmittels als Teil eines Beschichtungsmittels.

Die Erfindung umfasst jeweils auch die Kombination der genannten Ausführungsformen.

Nachfolgend wird die Erfindung anhand einiger Ausführungsbeispiele eingehender erläutert. Die Ausführungsbeispiele beschreiben dabei die Erfindung ohne diese zu beschränken.

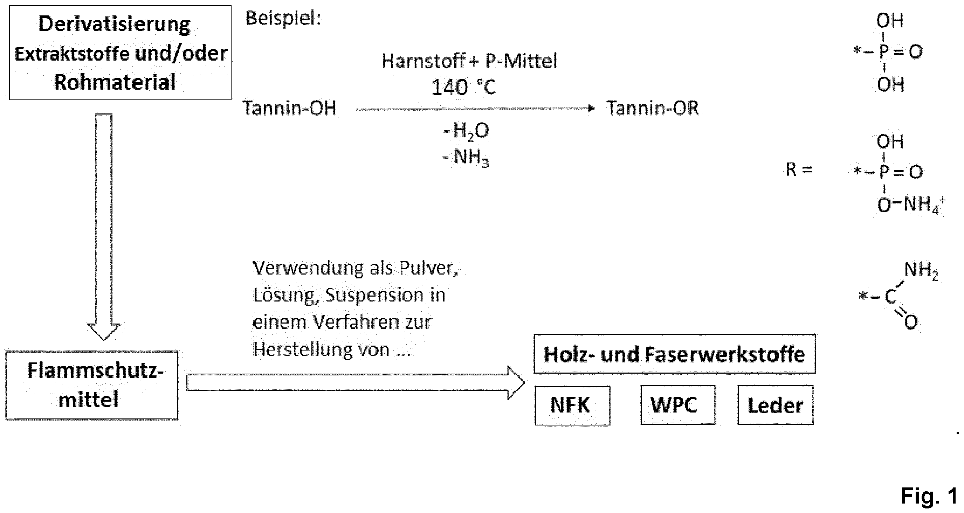

Fig. 1 zeigt ein Schema zur Herstellung eines erfindungsgemäßen Flammschutzmittels anhand des Beispiels von tanninhaltigen Rinden-Extraktstoffen und/oder Rinden-Rohmaterialien sowie dessen Verwendung.

### Allgemeine Vorschriften:

Die Bestimmung des Gesamt-Phosphorgehalts erfolgt mittels ICP-OES Spektrometer IRIS intrepid II XSP. Dieser Wert kann in den Gesamtphosphatgehalt umgerechnet werden.

Die Bestimmung des Orthophosphatgehalts erfolgt photometrisch mittels Vanadat-Molybdat-Methode an einem UV-VIS Spektrophotometer V650 von Jasco.

Der Gehalt der organisch gebundenen Phosphate wird aus der Differenz zwischen Gesamt-Phosphatgehalt und Orthophosphatgehalt ermittelt.

Die Bestimmung des Gesamt-Stickstoffgehalts erfolgt mittels Elementaranalyse mit einem Vario el III der Firma "elementar".

Die Bestimmung der organisch gebundenen Carbamatgruppen erfolgt nasschemisch nach einer institutsinternen Vorschrift, beschrieben u. a. von MILETZKY, F. (1985).

### Ausführungsbeispiel 1: Herstellung eines Tanninflammschutzmittels

Das Tanninflammschutzmittel wurde aus technischem Tannin (Fauth GmbH + Co.KG) durch Umsetzung mit Ortho-Phosphorsäure (Carl Roth GmbH +Co. KG) in geschmolzenem Harnstoff (Carl Roth GmbH +Co. KG) hergestellt. Die Komponenten Tannin, geschmolzener Harnstoff, Ortho-Phosphorsäure und Wasser wurden in einem Masseverhältnis 5 : 2,7 : 3,3375 : 1 miteinander vermischt. Die so hergestellte Mischung wurde anschließend 3 Stunden bei 140 °C in einem Trockenschrank erhitzt.

Das Tanninflammschutzmittel weist einen Gesamt-Stickstoffgehalt von 10,5 % (m/m) und einen Gesamt-Phosphorgehalt von 8,8 % (m/m) auf.

### Ausführungsbeispiel 2: Herstellung eines Rindenextraktflammschutzmittels durch Derivatisierung eines Rindenextrakts

Eichenrinde (*Quercus spec*.) wurde nach Lufttrocknung bis zur Homogenisierung in einer Schneidmühle (Retsch SM 100) mit einem Bodensieb mit Quadratlochung von 4,0 mm zerkleinert. 500 g des Rindengranulats aus Eichenrinde wurden mit 10 Liter Wasser vermischt und für 10 Stunden gekocht. Nach der Extraktion wurde die Rinde ausgewaschen, die Extraktlösung abgesaugt, in einem Rotationsverdampfer eingeengt und mittels Gefriertrocknung getrocknet. Der getrocknete Rindenextrakt wurde im Masseverhältnis Rindenextrakt zu Harnstoff zu Ammoniumdihydrogenphosphat (Carl Roth GmbH +Co. KG) 1,41 : 2,09 : 1 in einer Kugelmühle (Retsch PM 100) homogenisiert. Anschließend wurde das Gemisch für 3 Stunden bei 140 °C in einem Trockenschrank modifiziert.

Das Rindenextraktflammschutzmittel, hergestellt durch Derivatisierung eines Rindenextrakts, weist einen Gesamt-Stickstoffgehalt von 24,4 % (m/m) und einen Gesamt-Phosphorgehalt von 6,0 % (m/m) auf.

### Ausführungsbeispiel 3: Herstellung eines Rindenextraktflammschutzmittels durch Derivatisierung von Rinde und anschließender Extraktion

Eichenrinde wurde mittels einer Ultrazentrifugalmühle gemahlen. In einem Kneter (Werner & Pfleiderer) wurden 250 g dieser Rinde mit 117 g Ammoniumdihydrogenphosphat und 370 g Harnstoff vermischt. Die Mischung reagierte anschließend für 4 Stunden bei 150 °C. Die Extraktion erfolgte durch eine Abtrennung der wasserlöslichen Bestandteile dieser Mischung. Der Extrakt wurde in gelöster Form als Flammschutzmittel verwendet.

Das Rindenextraktflammschutzmittel, hergestellt durch Derivatisierung von Rinde und anschließender Extraktion weist einen Gesamt-Stickstoffgehalt von 25 % (m/m) und einen Gesamt-Phosphorgehalt von 4,3 % (m/m) auf.

### Ausführungsbeispiel 4: Herstellung eines Rindenflammschutzmittels

Eichenrinde wurde mittels einer Ultra-Zentrifugalmühle Retsch ZM 1000 unter Verwendung eines Siebes mit Trapezlochung von 0,5 mm gemahlen. In einem Kneter (Werner & Pfleiderer) wurden 250 g gemahlene Rinde mit 117 g Ammoniumdihydrogenphosphat und 370 g Harnstoff vermischt. Die Mischung reagierte anschließend für 4 Stunden bei 150 °C.

Das Rindenflammschutzmittel weist einen Gesamt-Stickstoffgehalt von 25 % (m/m) und einen Gesamt-Phosphorgehalt von 4,3 % (m/m) auf.

### Ausführungsbeispiel 5: Herstellung einer Holzfaserdämmstoffplatte mit Tanninflammschutzmittel

Das entsprechend Ausführungsbeispiel 1 hergestellte Tanninflammschutzmittel wurde im Verhältnis 1:2 (m/m) in Wasser bei einer Temperatur von 45 °C aufgelöst und im Verhältnis 10 % (dW_{Flammschutzmittelpulver}/dW_{Faser}) auf trockenen, hydrophobierten Holzfaserstoff (Kiefern-Refinerfaserstoff mit einer Faserfeuchte von 10 %) aufgesprüht. Der hydrophobierte Holzfaserstoff wurde mittels 1 % (dw_{Festparaffin}/dw_{Faser}) Paraffinemulsion (60 % Festparaffin) hergestellt. Danach wurden die Fasern mit Bindemittel (5 % PMDI (dw_{Faser})) beleimt und in einer Heißpresse bei einer Presstemperatur von 180 °C zu einer Holzfaserdämmstoffplatte mit einer Plattendicke von 10 mm verarbeitet.

Als Referenzen zu Ausführungsbeispiel 5 wurden eine Holzfaserdämmstoffplatte mit handelsüblichem Flammschutzmittel aus Polyphosphatsalz (EcoChem MD 573) (Referenz 1) im Verhältnis 10 % (dW_{Flammschutzmittelpulver}/dW_{Faser}) sowie eine Holzfaserdämmstoffplatte mit nicht derivatisiertem Tannin (Fa. Fauth) (Referenz 2) im Verhältnis 10 % (dW_{Tanninpulver}/dW_{Faser}) hergestellt. Weiterhin wurde als Referenz zu Ausführungsbeispiel 5 eine Holzfaserdämmstoffplatte ohne Flammschutzmittel (Referenz 3) hergestellt, wobei Wasser aufgesprüht wurde. Zur Erzeugung vergleichbarer Plattenrohdichten wurde hierbei eine größere Menge an Holzfaserstoff eingewogen.

### Ausführungsbeispiel 6: Herstellung einer Holzfaserdämmstoffplatte mit Rindenextraktflammschutzmittel durch Derivatisierung eines Rindenextrakts

Das entsprechend Ausführungsbeispiel 2 hergestellte Rindenextraktflammschutzmittel durch Derivatisierung eines Rindenextrakts wurde im Verhältnis 1:2 (m/m) in Wasser bei einer Temperatur von 45 °C aufgelöst und im Verhältnis 10 % (dw_{Flammschutzmittelpulver}/dw_{Faser}) SOWie 7 % (dw_{Flammschutz-mittelpulver}/dw_{Faser}) auf trockenen, hydrophobierten Holzfaserstoff (Kiefern-Refinerfaserstoff mit einer Faserfeuchte von 10 %) aufgesprüht. Der hydrophobierte Holzfaserstoff wurde mittels 1 % (dw_{Fest-paraffin}/dw_{Faser}) Paraffinemulsion (60 % Festparaffin) hergestellt. Danach wurden die Fasern mit Bindemittel (5 % PMDI (dw_{Faser})) beleimt und in einer Heißpresse bei einer Presstemperatur von 180 °C zu einer Holzfaserdämmstoffplatte mit einer Plattendicke von 10 mm verarbeitet.

Als Referenzen zu Ausführungsbeispiel 6 wurden eine Holzfaserdämmstoffplatte mit handelsüblichem Flammschutzmittel aus Polyphosphatsalz (EcoChem MD 573) (Referenz 1) im Verhältnis 10 % (dw_{Flammschutzmittelpulve}/dw_{Fase}) sowie eine Holzfaserdämmstoffplatte mit nicht derivatisiertem Rindenextrakt (Referenz 4) im Verhältnis 10 % (dw_{Rindenextraktpuiver}/dw_{Faser}) hergestellt. Weiterhin wurde als Referenz zu Ausführungsbeispiel 5 eine Holzfaserdämmstoffplatte ohne Flammschutzmittel (Referenz 3) hergestellt, wobei Wasser aufgesprüht wurde. Zur Erzeugung vergleichbarer Plattenrohdichten wurde hierbei eine größere Menge an Holzfaserstoff eingewogen.

### Ausführungsbeispiel 7: Herstellung einer Holzfaserdämmstoffplatte mit Rindenextraktflammschutzmittel durch Derivatisierung von Rinde und anschließender Extraktion

Das entsprechend Ausführungsbeispiel 3 hergestellte Rindenextraktflammschutzmittel durch Derivatisierung von Rinde und anschließender Extraktion wurde im Verhältnis 1:2 (m/m) in Wasser bei einer Temperatur von 45 °C aufgelöst und im Verhältnis 10 % (dw_{Flammschutzmittelpulver}/dw_{Faser}) auf trockenen hydrophobierten Holzfaserstoff (Kiefern-Refinerfaserstoff mit einer Faserfeuchte von 10 %) aufgesprüht. Der hydrophobierte Holzfaserstoff wird mittels 1 % (dw_{Festparaffin}/dw_{Faser}) Paraffinemulsion (60 % Festparaffin) hergestellt. Danach wurden die Fasern mit Bindemittel (5 % PMDI (dw_{Faser})) beleimt und in einer Heißpresse bei einer Presstemperatur von 180 °C zu einer Holzfaserdämmstoffplatte mit einer Plattendicke von 10 mm verarbeitet.

### Ausführungsbeispiel 8: Herstellung einer Holzfaserdämmstoffplatte mit Rindenflammschutzmittel

Das entsprechend Ausführungsbeispiel 4 hergestellte Rindenflammschutzmittel wurde in Pulverform (ohne Abtrennung der nicht in Wasser löslichen Bestandteile) dem trockenen, hydrophobierten Holzfaserstoff (Kiefern-Refinerfaserstoff mit einer Faserfeuchte von 10 %) im Verhältnis 10 % (dw_{Flammschutzmittelpulver}/dw_{Faser}) zugegeben und mit diesem vermischt. Zuvor erfolgte das Aufsprühen von Wasser, in derselben Menge, wie zum Lösen des Tanninflammschutzmittels in Ausführungsbeispiel 5 sowie der Rindenextraktflammschutzmittel in den Ausführungsbeispielen 6 und 7 verwendet wurde. Der hydrophobierte Holzfaserstoff wurde mittels 1 % (dw_{Festparaffin}/dW_{Faser}) Paraffinemulsion (60 % Festparaffin) hergestellt. Danach wurden die Fasern mit Bindemittel (5 % PMDI (dw_{Faser})) beleimt und in einer Heißpresse bei einer Presstemperatur von 180 °C zu einer Holzfaserdämmstoffplatte mit einer Plattendicke von 10 mm verarbeitet.

Vorteilhaft ermöglicht Ausführungsbeispiel 8 eine Vereinfachung der Herstellung von plattenförmigen Holz- und Faserwerkstoffen und/oder von Formteilen aus Holz- und Faserwerkstoffen, besonders von Faserplatten, besonders bevorzugt von Holzfaserdämmstoffplatten und damit eine Kosteneinsparung bei der Herstellung von plattenförmigen Holz- und Faserwerkstoffen und/oder von Formteilen aus Holz- und Faserwerkstoffen, besonders von Faserplatten, besonders bevorzugt von Holzfaserdämmstoffplatten, gegenüber den Ausführungsbeispielen 5, 6 und 7, aufgrund der Einsparung der Verfahrensschritte Extraktherstellung, Lösen des Flammschutzmittels im Lösungsmittel Wasser und Aufsprühen der Flammschutzmittellösung auf den Holzfaserstoff.

Als Referenzen zu Ausführungsbeispiel 8 wurden eine Holzfaserdämmstoffplatte mit physikalischer Mischung aus 250 g Eichenrinde, 370 g Harnstoff und 117 g Phosphatierungsmittel Ammoniumdihydrogenphosphat (Referenz 5) im Verhältnis 10 % (dw_{physikalische Pulvermischung}/dw_{Faser}) sowie eine Holzfaserdämmstoffplatte mit Eichenrinde (Referenz 6) im Verhältnis 10 % (dw_{Eichenrinden-pulver}/dw_{Faser}) hergestellt.

### Charakterisierung der Holzfaserdämmstoffplatten nach Ausführungsbeispiel 5 bis 8:

Die Prüfung der Rohdichte erfolgte nach DIN EN 323. Die Untersuchung des Brandverhaltens nach DIN 4102-1 erfolgte entsprechend des Abschnitts 6.2 "Baustoffklasse B2", Kantenbeflammung. Weiterhin wurden die Biegefestigkeit nach DIN EN 310, die Querzugfestigkeit nach DIN EN 319 und die Wasseraufnahmefähigkeit in Anlehnung an DIN EN 317 bestimmt.

### Holzfaserdämmstoffplatte mit Tanninflammschutzmittel nach Ausführungsbeispiel 5

Die Eigenschaften der nach Ausführungsbeispiel 5 hergestellten Holzfaserdämmstoffplatte mit Tanninflammschutzmittel sind in Tabelle 1 aufgeführt.

**Tabelle 1: Eigenschaften der hergestellten Holzfaserdämmstoffplatte mit Tanninflammschutzmittel nach Ausführungsbeispiel 5 sowie der Referenz 1, Referenz 2 und Referenz 3. Angegeben sind die Mittelwerte aus einer Probenanzahl n und die Standardabweichung.**

| Kennwert | Holzfaserdämmstoffplatte | | | |
|---|---|---|---|---|
| | mit 10 % (m/m) Tanninflammschutzmittel | mit 10 % (m/m) Flammschutzmittel aus Polyphosphatsalz (Referenz 1) | mit 10 % (m/m) nicht derivatisiertem Tannin (Referenz 2) | ohne Flammschutzmittel (Referenz 3) |
| Brandverhalten (Rohdichte in kg/m3) [Baustoffklasse], n = 2 | selbst verlöschend (239,0 ± 14,9) [DIN 4102-B2] | selbst verlöschend (235,5 ± 7,9) [DIN 4102-B2] | glimmt weiter (243,6 ± 8,4) [DIN 4102-B3 leichtentflammbar] | glimmt weiter (247,3 ± 4,3) [DIN 4102-B3 leichtentflammbar] |
| Biegefestigkeit in kPa (Rohdichte in kg/m³), n = 3 | 1459,9 ± 293,6 (237,8 ± 14,1) | 661,8 ± 87,3 (222,1 ± 13,9) | - | 953,9 ± 149,7 (217,0 ± 9,4) |
| Querzugfestigkeit in kPa (Rohdichte in kg/m³), n = 5 | 20,6 ± 5,0 (219,9 ± 9,0) | 2,1 ± 0,1 (221,7 ± 5,2) | - | 11,8 ± 3,7 (224,8 ± 15,4) |
| 24 h Wasser-aufnahme in % (Rohdichte in kg/m³), n = 5 | 95,0 ± 6,2 (192,9 ± 13,4) | 111,7 ± 3,6 (205,8 ± 9,0) | - | 87,4 ± 1,1 (221,0 ± 10,4) |

Bei der Untersuchung des Brandverhaltens erreichte keine der Flammenspitzen der Proben die Messmarke (in einem Abstand von 150 mm von der Unterkante der Proben) vor Ende der 20. Sekunde nach dem Beginn der Beflammung. Sowohl die Holzfaserdämmstoffplatte mit Tanninflammschutzmittel, hergestellt nach Ausführungsbeispiel 5 als auch die Holzfaserdämmstoffplatte mit handelsüblichem Flammschutzmittel aus Polyphosphatsalz (Referenz 1) führen zu einer deutlichen Reduzierung der Brandfähigkeit der Dämmplatte (selbst verlöschend). Beide Holzfaserdämmstoffplatten erfüllen die Anforderungen der DIN 4102-1, Kategorie B2 (normal entflammbar). Die Holzfaserdämmstoffplatte mit nicht derivatisiertem Tannin (Referenz 2) glomm nach Entfernen der Flamme weiter, weshalb diese Holzfaserdämmstoffplatte nur die Anforderungen der Kategorie B3 (leicht entflammbar) erfüllt. Gleiches gilt für Referenz 3, die Holzfaserdämmstoffplatte ohne Flammschutzmittel.

Die Untersuchung der Festigkeiten zeigte eine deutliche Verringerung der Festigkeiten der Holzfaserdämmstoffplatte mit handelsüblichem Flammschutzmittel aus Polyphosphatsalz (Referenz 1) im Vergleich zur Holzfaserdämmstoffplatte ohne Flammschutzmittel (Referenz 3), wohingegen die Holzfaserdämmstoffplatte mit Tanninflammschutzmittel, hergestellt nach Ausführungsbeispiel 5 eine Steigerung der Festigkeiten im Vergleich zur Holzfaserdämmstoffplatte ohne Flammschutzmittel (Referenz 3) zeigte. Dabei zeigte die Holzfaserdämmstoffplatte mit Tanninflammschutzmittel, hergestellt nach Ausführungsbeispiel 5 eine Steigerung der Biegefestigkeit um den Faktor 2 sowie eine Steigerung der Querzugfestigkeit um den Faktor 10 im Vergleich zur Holzfaserdämmstoffplatte mit handelsüblichem Flammschutzmittel aus Polyphosphatsalz (Referenz 1).

Die Untersuchung der Wasseraufnahmefähigkeit zeigte die Erhöhung der Wasseraufnahme der Holzfaserdämmstoffplatte mit handelsüblichem Flammschutzmittel aus Polyphosphatsalz (Referenz 1) im Vergleich zur Holzfaserdämmstoffplatte ohne Flammschutzmittel (Referenz 3). Die Holzfaserdämmstoffplatte mit Tanninflammschutzmittel, hergestellt nach Ausführungsbeispiel 5 weist dagegen keine Erhöhung der Wasseraufnahmefähigkeit im Vergleich zur Holzfaserdämmstoffplatte ohne Flammschutzmittel (Referenz 3) auf.

### Holzfaserdämmstoffplatte mit Rindenextraktflammschutzmittel durch Derivatisierung eines Rindenextrakts nach Ausführungsbeispiel 6

Die Eigenschaften der nach Ausführungsbeispiel 6 hergestellten Holzfaserdämmstoffplatte mit Rindenextraktflammschutzmittel durch Derivatisierung eines Rindenextrakts sind in Tabelle 2 aufgeführt.

**Tabelle 2: Eigenschaften der hergestellten Holzfaserdämmstoffplatte mit Rindenextraktflammschutzmittel durch Derivatisierung eines Rindenextrakts nach Ausführungsbeispiel 6 sowie der Referenz 4. Angegeben sind die Mittelwerte aus einer Probenanzahl n und die Standardabweichung.**

| Kennwert | Holzfaserdämmstoffplatte mit | | |
|---|---|---|---|
| | 10 % (m/m) Rindenextraktflammschutzmittel durch Derivatisierung eines Rindenextrakts | 7 % (m/m) Rindenextraktflammschutzmittel durch Derivatisierung eines Rindenextrakts | 10 % (m/m) nicht derivatisierter Rindenextrakt (Referenz 4) |
| Brandverhalten (Rohdichte in kg/m3) [Baustoffklasse], n = 2 | selbst verlöschend (231,2 ± 30,9) [DIN 4102-B2] | selbst verlöschend (229,3 ± 19,9) [DIN 4102-B2] | brennt weiter (213,8 ± 20,0) [DIN 4102-B3 leichtentflammbar] |
| Biegefestigkeit in kPa (Rohdichte in kg/m³), n = 3 | 928,8 ± 256,6 (238,3 ± 18,6) | 1118,3 ± 144,7 (244,4 ± 8,6) | - |
| Querzugfestigkeit in kPa (Rohdichte in kg/m³), n = 5 | 12,9 ± 7,4 (230,3 ± 14,1) | 18,6 ± 9,2 (223,5 ± 11,3) | - |

Bei der Untersuchung des Brandverhaltens erreichte keine der Flammenspitzen der Proben die Messmarke (in einem Abstand von 150 mm von der Unterkante der Proben) vor Ende der 20. Sekunde nach dem Beginn der Beflammung. Sowohl die Holzfaserdämmstoffplatte mit Rindenextraktflammschutzmittel, hergestellt nach Ausführungsbeispiel 6 mit einer Dosierung von 10 % (dw_{Flammschutzmittelpulver}/dw_{Faser}) als auch mit einer Dosierung von 7 % (dw_{Flammschutzmittelpulver}/dw_{Faser}) führten zu einer deutlichen Reduzierung der Brandfähigkeit der Dämmplatte (selbst verlöschend). Beide Holzfaserdämmstoffplatten erfüllen die Anforderungen der DIN 4102-1, Kategorie B2 (normal entflammbar). Die Holzfaserdämmstoffplatte mit 10 % (m/m) nicht derivatisiertem Rindenextrakt (Referenz 4) brannte nach Entfernen der Flamme weiter, weshalb diese Holzfaserdämmstoffplatte nur die Anforderungen der Kategorie B3 (leicht entflammbar) erfüllt.

Die Untersuchung der Festigkeiten zeigte eine Steigerung der Festigkeiten der Holzfaserdämmstoffplatte, hergestellt mit Rindenextraktflammschutzmittel entsprechend Ausführungsbeispiel 6 im Vergleich zur Holzfaserdämmstoffplatte mit handelsüblichem Flammschutzmittel aus Polyphosphatsalz (Referenz 1). Mit einer Dosierung von 10 % (dw_{Flammschutzmittelpulver}/dw_{Faser}) wurde eine Steigerung der Biegefestigkeit der Holzfaserdämmstoffplatte, hergestellt mit Rindenextraktflammschutzmittel entsprechend Ausführungsbeispiel 6, um den Faktor 1,5 sowie eine Steigerung der Querzugfestigkeit um den Faktor 6 im Vergleich zur Holzfaserdämmstoffplatte mit handelsüblichem Flammschutzmittel aus Polyphosphatsalz (Referenz 1) erzielt. Die Holzfaserdämmstoffplatte, hergestellt mit Rindenextraktflammschutzmittel entsprechend Ausführungsbeispiel 6 mit einer Dosierung von 7 % (dw_{Flammschutzmittelpulver}/dw_{Faser}) wies eine Steigerung der Biegefestigkeit um den Faktor 2 sowie eine Steigerung der Querzugfestigkeit um den Faktor 9 im Vergleich zur Holzfaserdämmstoffplatte mit handelsübliche Flammschutzmittel aus Polyphosphatsalz (Referenz 1) auf.

### Holzfaserdämmstoffplatte mit Rindenextraktflammschutzmittel durch Derivatisierung von Rinde und anschließender Extraktion nach Ausführungsbeispiel 7

Die Eigenschaften der nach Ausführungsbeispiel 7 hergestellten Holzfaserdämmstoffplatte mit Rindenextraktflammschutzmittel durch Derivatisierung von Rinde und anschließender Extraktion sind in Tabelle 3 aufgeführt.

**Tabelle 3: Eigenschaften der hergestellten Holzfaserdämmstoffplatte mit Rindenextraktflammschutzmittel durch Derivatisierung von Rinde und anschließender Extraktion nach Ausführungsbeispiel 7. Angegeben sind die Mittelwerte aus einer Probenanzahl n und die Standardabweichung.**

| Kennwert | Holzfaserdämmstoffplatte mit |
|---|---|
| | 10 % (m/m) Rindenextraktflammschutzmittel durch Derivatisierung von Rinde und anschließender Extraktion |
| Brandverhalten (Rohdichte in kg/m³) [Baustoffklasse], n = 2 | selbst verlöschend (223,5 ± 15,5) [DIN 4102-B2] |
| Biegefestigkeit in kPa (Rohdichte in kg/m³), n = 3 | 830,4 ± 20,3 (242,6 ± 6,0) |
| Querzugfestigkeit in kPa (Rohdichte in kg/m³), n = 5 | 4,2 ± 1,5 (215,7 ± 21,4) |

Bei der Untersuchung des Brandverhaltens erreichte keine der Flammenspitzen der Proben die Messmarke (in einem Abstand von 150 mm von der Unterkante der Proben) vor Ende der 20. Sekunde nach dem Beginn der Beflammung. Die Holzfaserdämmstoffplatte mit Rindenextraktflammschutzmittel durch Derivatisierung von Rinde und anschließender Extraktion, hergestellt nach Ausführungsbeispiel 7 führte zu einer deutlichen Reduzierung der Brandfähigkeit der Dämmplatte (selbst verlöschend). Die Holzfaserdämmstoffplatte erfüllt die Anforderungen der DIN 4102-1, Kategorie B2 (normal entflammbar).

Die Untersuchung der Festigkeiten zeigte eine Steigerung der Festigkeiten der Holzfaserdämmstoffplatte, hergestellt mit Rindenextraktflammschutzmittel entsprechend Ausführungsbeispiel 7, im Vergleich zur Holzfaserdämmstoffplatte mit handelsüblichem Flammschutzmittel aus Polyphosphatsalz (Referenz 1), insbesondere eine Steigerung der Biegefestigkeit um den Faktor 1,25 sowie eine Steigerung der Querzugfestigkeit um den Faktor 2 im Vergleich zur Holzfaserdämmstoffplatte mit handelsüblichem Flammschutzmittel aus Polyphosphatsalz (Referenz 1).

### Holzfaserdämmstoffplatte mit Rindenflammschutzmittel nach Ausführungsbeispiel 8

Die Eigenschaften der hergestellten Holzfaserdämmstoffplatte nach Ausführungsbeispiel 8 sind in Tabelle 4 aufgeführt.

**Tabelle 4: Eigenschaften der nach Ausführungsbeispiel 8 hergestellten Holzfaserdämmstoffplatte mit Rindenflammschutzmittel sowie der Referenz 5 und der Referenz 6. Angegeben sind die Mittelwerte aus einer Probenanzahl n und die Standardabweichung.**

| Kennwert | Holzfaserdämmstoffplatte mit | | |
|---|---|---|---|
| | 10 % (m/m) Rindenflammschutzmittel | 10 % (m/m) physikalischer Mischung (Referenz 5) | 10 % (m/m) Eichenrinde (Referenz 6) |
| Brandverhalten (Rohdichte in kg/m3) [Baustoffklasse], n = 2 | selbst verlöschend (207,3 ± 12,1) [DIN 4102-B2] | brennt weiter (225,1 ± 26,1) [DIN 4102-B3 leichtentflammbar] | brennt weiter (233,1 ± 17,0) [DIN 4102-B3 leichtentflammbar] |
| Biegefestigkeit in N/mm² (Rohdichte in kg/m³), n = 3 | 740,0 ± 104,8 (226,5 ± 6,1) | - | - |
| Querzugfestigkeit in N/mm² (Rohdichte in kg/m³), n = 5 | 10,2 ± 5,4 (228,1 ± 9,1) | | |

Bei der Untersuchung des Brandverhaltens erreichte keine der Flammenspitzen der Proben die Messmarke (in einem Abstand von 150 mm von der Unterkante der Proben) vor Ende der 20. Sekunde nach dem Beginn der Beflammung. Die Holzfaserdämmstoffplatte mit Rindenflammschutzmittel, hergestellt nach Ausführungsbeispiel 8, führte zu einer deutlichen Reduzierung der Brandfähigkeit der Dämmplatte (selbst verlöschend). Die Holzfaserdämmstoffplatte erfüllte die Anforderungen der DIN 4102-1, Kategorie B2 (normal entflammbar). Die Holzfaserdämmstoffplatte mit physikalischer Mischung von Eichenrinde, Harnstoff und dem Phosphatierungsmittel (Referenz 5) sowie die Holzfaserdämmstoffplatte mit Eichenrinde (Referenz 6) brannten nach Entfernen der Flamme weiter, weshalb diese beiden Holzfaserdämmstoffplatten nur die Anforderungen der Kategorie B3 (leicht entflammbar) erfüllen.

Die vergleichende Untersuchung des Brandverhaltens der Holzfaserdämmstoffplatte mit Rindenflammschutzmittel, hergestellt nach Ausführungsbeispiel 8 und der Holzfaserdämmstoffplatte mit physikalischer Mischung Eichenrinde, Harnstoff und dem Phosphatierungsmittel Ammoniumdihydrogenphosphat (Referenz 5) belegt, dass erst unter Anwendung des erfindungsgemäßen Verfahrens zur Derivatisierung von mindestens einem Extraktstoff und/oder von mindestens einem Rohmaterial, enthaltend mindestens einen Extraktstoff ein erfindungsgemäßes Flammschutzmittel hergestellt wird.

Lediglich das physikalische Mischen von mindestens einem Extraktstoff und/oder von mindestens einem Rohmaterial, enthaltend mindestens einen Extraktstoff, von Harnstoff und einem Phosphatierungsmittel liefert keinen Beitrag zur Flammschutzausstattung von plattenförmigen Holz- und Faserwerkstoffen und/oder von Formteilen aus Holz- und Faserwerkstoffen, besonders von Faserplatten, besonders bevorzugt von Holzfaserdämmstoffplatten.

Die Untersuchung der Festigkeiten zeigte eine Steigerung der Festigkeiten der Holzfaserdämmstoffplatte, hergestellt mit Rindenflammschutzmittel entsprechend Ausführungsbeispiel 8, im Vergleich zur Holzfaserdämmstoffplatte mit handelsüblichem Flammschutzmittel aus Polyphosphatsalz (Referenz 1), insbesondere eine geringe Steigerung der Biegefestigkeit sowie eine Steigerung der Querzugfestigkeit um den Faktor 5.

### Zitierte Nichtpatentliteratur

Bilitewski B, Darbra RM, Barcelo D (2012) Global Risk-Based Management of Chemical Additives I: Production, Usage and Environmental Occurrence, Springer-Verlag Berlin Heidelberg
DIN 4102-1: 1998-05 Brandverhalten von Baustoffen und Bauteilen - Teil 1: Baustoffe; Begriffe, Anforderungen und Prüfungen
DIN EN 310: 1993-08 Holzwerkstoffe; Bestimmung des Biege-Elastizitätsmoduls und der Biegefestigkeit
DIN EN 317: 1993-08 Spanplatte und Faserplatte; Bestimmung der Dickenquellung nach Wasserlagerung
DIN EN 319: 1993-08 Spanplatte und Faserplatte; Bestimmung der Zugfestigkeit senkrecht zur Plattenebene
DIN EN 323: 1993-08 Holzwerkstoffe; Bestimmung der Rohdichte
DIN EN 13501-1: 2010-01 Klassifizierung von Bauprodukten und Bauarten zu ihrem Brandverhalten - Teil 1: Klassifizierung mit den Ergebnissen aus den Prüfungen zum Brandverhalten von Bauprodukten
DIN EN 15101-1: 2013-12 Wärmedämmstoffe für Gebäude - An der Verwendungsstelle hergestellter Wärmedämmstoff aus Zellulosefüllstoff (LFCl) - Teil 1: Spezifikation für die Produkte vor dem Einbau
Kessel, H. (1987) Bestimmung der funktionellen Carbamoylgruppe in Carbamatstärken und Carbamatphosphatstärken. Starch/Stärke, 39: 57-60. doi:10.1002/star.19870390208
Leisewitz A, Kruse H, Schramm E (2000) Erarbeitung von Bewertungsgrundlagen zur Substitution umweltrelevanter Flammschutzmittel, Umweltforschungsplan des Bundesministers für Umwelt, Naturschutz und Reaktorsicherheit, Band I: S.132
Miletzky, F. (1985): Über die Oxidation von Sulfitablaugen der Zellstoffindustrie mit molekularem Sauerstoff im alkalischen, insbesondere im ammoniakalischen Milieu. Dissertation, Technische Universität Dresden, Dresden
N. N. (2014) Fachagentur Nachwachsende Rohstoffe e. V. (FNR) (Hrsg.), Marktübersicht Dämmstoffe aus nachwachsenden Rohstoffen, 6. Überarbeitete Auflage, FNR 2014
VERORDNUNG (EU) 2016/1017 DER KOMMISSION vom 23. Juni 2016 zur Änderung von Anhang XVII der Verordnung (EG) Nr. 1907/2006 des Europäischen Parlaments und des Rates zur Registrierung, Bewertung, Zulassung und Beschränkung chemischer Stoffe (REACH) hinsichtlich anorganischer Ammoniumsalze

## Patentansprüche

1. Flammschutzmittel umfassend
• Rindenmaterial oder Rindenextrakt,
wobei das Rindenmaterial oder der Rindenextrakt ein polyhydroxyphenol- oder tanninhaltiges Material ist,
• wobei Hydroxylgruppen im Rindenmaterial oder im Rindenextrakt zumindest teilweise zu Phosphat- und/oder Carbamatgruppen verestert sind,
wobei das Flammschutzmittel einen Gesamt-Phosphorgehalt im Bereich von 2,5 % bis 50 % (m/m) und einen Gesamt-Stickstoffgehalt im Bereich von 2,5 % bis 30 % (m/m) aufweist,
wobei das Flammschutzmittel einen Gehalt an organisch gebundenen Phosphaten von 5 % bis 30 % (m/m) und/oder einen Gehalt an organisch gebundenen Carbamaten im Bereich von 1 % bis 5 % (m/m) aufweist.

2. Flammschutzmittel nach Anspruch 1, enthaltend Monophosphatester, Di- oder Triphosphatgruppen, Carbamatgrupppen, Phosphat-Carbamatgruppen, Urethanbindungen und/oder Harnstoffkomplexe.

3. Flammschutzmittel nach Anspruch 1 oder 2, enthaltend zusätzlich ein Phosphatierungsmittel ausgewählt aus Ammoniumdihydrogenphosphat, Diammoniumhydrogenphosphat, Triammoniumphosphat, Natriumdihydrogenphosphat, Dinatriumhydrogenphosphat, Trinatriumphosphat, Ureaphosphat, Phosphorsäure und deren Hydrate sowie Mischungen aus den genannten Phosphatierungsmitteln.

4. Flammschutzmittel nach einem der Ansprüche 1 bis 3 umfassend mindestens einen weiteren Bestandteil, wobei der mindestens eine weitere Bestandteil ausgewählt ist aus Harnstoff, Biuret, Phosphatsalzen und Ammoniumsalzen.

5. Flammschutzmittel nach einem der Ansprüche 1 bis 4, **dadurch gekennzeichnet, dass** das Flammschutzmittel einen Gesamt-Phosphorgehalt im Bereich von 5 % bis 50 % (m/m) und/oder einen Gesamt-Stickstoffgehalt im Bereich von 10 % bis 30 % (m/m) aufweist.

6. Verfahren zur Herstellung eines Flammschutzmittels nach einem der Ansprüche 1 bis 5 mit den Schritten:
a) Zusatz von mindestens einem Phosphatsalz und/oder Phosphorsäure als Phosphatierungsmittel sowie geschmolzenem Harnstoff zu Rindenmaterial oder Rindenextrakt, wobei das Rindenmaterial oder der Rindenextrakt ein polyhydroxyphenol- oder tanninhaltiges Material ist,
b) Homogenisierung und Derivatisierung unter Temperatureinwirkung.

7. Verfahren nach Anspruch 6, **dadurch gekennzeichnet, dass** das Phosphatierungsmittel dem Rindenmaterial oder dem Rindenextrakt in einem Masseverhältnis von 0,5:1 bis 4:1 und der geschmolzene Harnstoff dem Rindenmaterial oder dem Rindenextrakt in einem Masseverhältnis von 1:1 bis 6:1 zugesetzt wird.

8. Verfahren nach Anspruch 6 oder 7, **dadurch gekennzeichnet, dass** in Schritt b) die Homogenisierung und Derivatisierung bei einer Temperatur von mindestens 130 °C erfolgt.

9. Verfahren nach einem der Ansprüche 6 bis 8, **dadurch gekennzeichnet, dass** das Verfahren zusätzlich einen Extraktionsschritt umfasst, der vor Schritt a) oder nach Schritt b) erfolgt.

10. Verfahren nach einem der Ansprüche 6 bis 9, **dadurch gekennzeichnet, dass** nach Schritt b) ein weiterer Zusatz von Phosphatsalz und/oder Phosphorsäure und/oder Harnstoff erfolgt.

11. Verwendung eines Flammschutzmittels nach einem der Ansprüche 1 bis 5 in der Herstellung oder zur Beschichtung von Holz- oder Faserwerkstoffen, Dämmmaterialien, Verbundmaterialien, naturfaserverstärkten Kunststoffen (NFK), Holz-Polymer-Werkstoffen (WPC), Leder oder Lederwerkstoffen.

12. Werkstoffe aufweisend ein Flammschutzmittel nach einem der Ansprüche 1 bis 5.

13. Werkstoffe nach Anspruch 12 ausgewählt aus Holz- oder Faserwerkstoffen, Dämmmaterialien, Verbundmaterialien, naturfaserverstärkten Kunststoffen (NFK), Holz-Polymer-Werkstoffen (WPC), Leder oder Lederwerkstoffen.

14. Verfahren zur Herstellung eines Werkstoffes nach Anspruch 12 oder 13, wobei die Applikation des Flammschutzmittels im Nass- und/oder im Trockenverfahren, als Pulver oder in Lösung oder als Suspension oder als Teil eines Beschichtungsmittels erfolgt.

## Claims

1. Flame retardant comprising
• bark material or bark extract,
wherein the bark material or the bark extract is a polyhydroxyphenol or tannin containing material,
• wherein hydroxyl groups in the bark material or in the bark extract are at least partially esterified to phosphate and/or carbamate groups,
wherein the flame retardant having a total phosphorus content in the range of 2.5 % to 50 % (w/w) and a total nitrogen content in the range of 2.5 % to 30 % (w/w),
wherein the flame retardant having a content of organically bound phosphates of 5 % to 30 % (w/w) and/or a content of organically bound carbamates in the range of 1 % to 5 % (w/w).

2. Flame retardant according to claim 1, containing monophosphate esters, di- or triphosphate groups, carbamate groups, phosphate-carbamate groups, urethane bonds and/or urea complexes.

3. Flame retardant according to claim 1 or 2, additionally containing a phosphating agent selected from ammonium dihydrogen phosphate, diammonium hydrogen phosphate, triammonium phosphate, sodium dihydrogen phosphate, disodium hydrogen phosphate, trisodium phosphate, urea phosphate, phosphoric acid and their hydrates and mixtures of the named phosphating agents.

4. Flame retardant according to one of the claims 1 to 3 comprising at least one further component, wherein the at least one further component is selected from urea, biuret, phosphate salts and ammonium salts.

5. Flame retardant according to one of the claims 1 to 4, **characterized in that** the flame retardant has a total phosphorus content in the range of 5 % to 50 % (w/w) and/or a total nitrogen content in the range of 10 % to 30 % (w/w).

6. Method for the preparation of a flame retardant according to one of the claims 1 to 5 with the steps:
a) Addition of at least one phosphate salt and/or phosphoric acid as phosphating agent and molten urea to bark material or bark extract,
wherein the bark material or the bark extract is a polyhydroxyphenol or tannin containing material,
b) Homogenization and derivatization under the influence of temperature.

7. Method according to claim 6, **characterized in that** the phosphating agent is added to the bark material or the bark extract in a mass ratio of 0.5:1 to 4:1 and the molten urea is added to the bark material or the bark extract in a mass ratio of 1:1 to 6:1.

8. Method according to claim 6 or 7, **characterized in that** in step b) the homogenization and derivatization is carried out at a temperature of at least 130 °C.

9. Method according to one of the claims 6 to 8, **characterized in that** the method additionally comprises an extraction step, which is carried out before step a) or after step b).

10. Method according to one of the claims 6 to 9, **characterized in that** after step b) a further addition of phosphate salt and/or phosphoric acid and/or urea is carried out.

11. Use of a flame retardant according to one of the claims 1 to 5 in the preparation or for coating of wood or fibre materials, insulating materials, composite materials, natural fibre reinforced plastics (FRP), wood-polymer composites (WPC), leather or leather materials.

12. Materials containing a flame retardant according to one of the claims 1 to 5.

13. Materials according to claim 12 selected from wood or fibre materials, insulating matrials, composite materials, natural fibre reinforced plastics (FRP), wood-polymer composites (WPC), leather or leather materials.

14. Method for the preparation of a material according to claim 12 or 13, wherein the application of the flame retardant is carried out in the wet and/or dry process, as powder or in solution or as suspension or as part of a coating agent.

## Revendications

1. Agent ignifuge comprenant
• un matériau d'écorce ou un extrait d'écorce,
le matériau d'écorce ou l'extrait d'écorce étant un matériau contenant du polyhydroxyphénol ou du tanin,
• les groupes hydroxyle du matériau d'écorce ou de l'extrait d'écorce étant au moins partiellement estérifiés en groupes phosphate et/ou carbamate,
l'agent ignifuge ayant une teneur totale en phosphore comprise entre 2,5 et 50 % (m/m) et une teneur totale en azote comprise entre 2,5 et 30 % (m/m),
l'agent ignifuge ayant une teneur en phosphates organiquement liés comprise entre 5 et 30 % (m/m) et/ou une teneur en carbamates organiquement liés comprise entre 1 et 5 % (m/m).

2. Agent ignifuge selon la revendication 1, contenant des esters de monophosphate, des groupes di- ou triphosphate, des groupes carbamate, des groupes phosphate-carbamate, des liaisons uréthane et/ou des complexes d'urée.

3. Agent ignifuge selon la revendication 1 ou 2, contenant en outre un agent de phosphatation choisi parmi le dihydrogénophosphate d'ammonium, l'hydrogénophosphate de diammonium, le phosphate de triammonium, le dihydrogénophosphate de sodium, l'hydrogénophosphate disodique, le phosphate trisodique, l'uréaphosphate, l'acide phosphorique et leurs hydrates ainsi que les mélanges des agents de phosphatation mentionnés.

4. Agent ignifuge selon l'une des revendications 1 à 3, comprenant au moins un autre constituant, l'au moins un autre constituant étant choisi parmi l'urée, le biuret, les sels de phosphate et les sels d'ammonium.

5. Agent ignifuge selon l'une des revendications 1 à 4, **caractérisé en ce que** l'agent ignifuge a une teneur totale en phosphore comprise entre 5 et 50 % (m/m) et/ou une teneur totale en azote comprise entre 10 et 30 % (m/m).

6. Procédé de production d'un agent ignifuge selon l'une des revendications 1 à 5, comprenant les étapes :
a) d'ajout d'au moins un sel de phosphate et/ou d'acide phosphorique comme agent de phosphatation et d'urée fondue à un matériau d'écorce ou à un extrait d'écorce, le matériau d'écorce ou l'extrait d'écorce étant un matériau contenant du polyhydroxyphénol ou du tanin,
b) d'homogénéisation et de dérivatisation sous l'effet de la température.

7. Procédé selon la revendication 6, **caractérisé en ce que** l'agent de phosphatation est ajouté au matériau d'écorce ou à l'extrait d'écorce dans un rapport de masse de 0,5:1 à 4:1 et l'urée fondue est ajoutée au matériau d'écorce ou à l'extrait d'écorce dans un rapport de masse de 1:1 à 6:1.

8. Procédé selon la revendication 6 ou 7, **caractérisé en ce que**, à l'étape b), l'homogénéisation et la dérivatisation sont effectuées à une température d'au moins 130 °C.

9. Procédé selon l'une des revendications 6 à 8, **caractérisé en ce que** le procédé comprend en outre une étape d'extraction qui est réalisée avant l'étape a) ou après l'étape b).

10. Procédé selon l'une des revendications 6 à 9, **caractérisé en ce que**, après l'étape b), un nouvel ajout de sel de phosphate et/ou d'acide phosphorique et/ou d'urée est effectué.

11. Utilisation d'un agent ignifuge selon l'une des revendications 1 à 5 dans la production ou le revêtement de bois ou de matériaux en fibres, de matériaux isolants, de matériaux composites, de plastiques renforcés de fibres naturelles (NFK), de matériaux bois-polymères (WPC), de cuir ou de matériaux en cuir.

12. Matériaux comprenant un agent ignifuge selon l'une des revendications 1 à 5.

13. Matériaux selon la revendication 12, choisis parmi les matériaux en bois ou en fibres, les matériaux isolants, les matériaux composites, les plastiques renforcés de fibres naturelles (NFK), les matériaux bois-polymères (WPC), le cuir ou les matériaux en cuir.

14. Procédé de production d'un matériau selon la revendication 12 ou 13, dans lequel l'application de l'agent ignifuge est effectuée selon un procédé humide et/ou sec, sous forme de poudre ou en solution, en suspension ou comme partie d'un agent de revêtement.
